# Europäisches Patentamt
# European Patent Office
# Office européen des brevets

(19)

(11) Numéro de publication: **0 039 979**
**B1**

(12)

# FASCICULE DE BREVET EUROPEEN

(45) Date de publication du fascicule du brevet: **08.01.86**

(51) Int. Cl.⁴: **H 04 L 25/03**

(21) Numéro de dépôt: **81200499.2**

(22) Date de dépôt: **12.05.81**

(54) **Système adaptatif de réception de données numériques à compensation des distorsions d'amplitude et de phase introduites par le canal de transmission des données.**

(30) Priorité: **14.05.80 FR 8010862**

(43) Date de publication de la demande:
**18.11.81 Bulletin 81/46**

(45) Mention de la délivrance du brevet:
**08.01.86 Bulletin 86/02**

(84) Etats contractants désignés:
**DE FR GB SE**

(56) Documents cités:
**PROCEEDINGS OF THE NATIONAL ELECTRONICS CONFERENCE, vol. 28, 8-10 octobre 1973, Chicago, US, Ed. National Electronics Conference TIEN-LIN CHANG: "A new equalization technique", pages 335-338**

**IEEE TRANSACTIONS ON COMMUNICATIONS, vol. COM-24, no. 8, août 1976, New York, US, CANTONI et al.: "Properties of the Eigenvectors of Persymmetric Matrices with Applications to Communication Theory", pages 804-809**

(73) Titulaire: **Laboratoires d'Electronique et de Physique Appliquée L.E.P.**
**3, Avenue Descartes**
**F-94450 Limeil-Brévannes (FR)**
(84) **FR**

(73) Titulaire: **N.V. Philips' Gloeilampenfabrieken**
**Groenewoudseweg 1**
**NL-5621 BA Eindhoven (NL)**
(84) **DE GB SE**

(72) Inventeur: **Sari, Hikmet**
**Sociéte Civile S.P.I.D. 209 rue de L'Université**
**F-75007 Paris (FR)**

(74) Mandataire: **Landousy, Christian et al**
**Société Civile S.P.I.D. 209, Rue de l'Université**
**F-75007 Paris (FR)**

(56) Documents cités:
**E.Newhall, S.U.H.Qureshi, C.F.Simone: "A technique for finding approximate inverse systems and its application to equalization IEEE trans.on communication technology, vol. COM-19, no. 6, Dec. 1961, pp. 1116-1127**

## Description

La présenté invention concerne un système adaptatif de réception de données numériques à compensation des distorsions d'amplitude et de phase introduites par le canal de transmission des données.

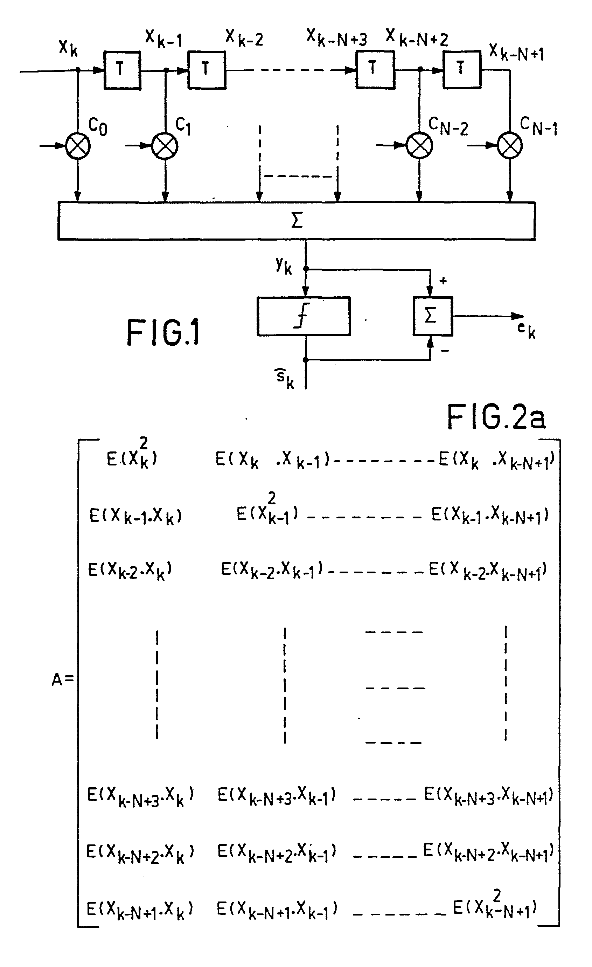

On sait en effet qu'aux débits de transmission élevés, une restitution correcte, en sortie du canal de transmission, des signaux émis à son entrée n'est plus possible sans la présence d'un circuit de compensation dit égaliseur et qui est souvent constitué par un filtre transversal non récursif, c'est-à-dire par un circuit capable de corriger la réponse d'un canal de transmission à partir d'une somme finie et pondérée de réponses partielles disponibles sur des prises successives d'un réseau d'impédances à base de lignes de retard; un égaliseur de type classique à N coefficients de pondération, est représenté sur la figure 1 (une description d'un égaliseur à sept coefficients est faite dans l'article de J. G. Proakis et J. H. Miller paru aux pages 484 à 497 de la revue IEEE Transactions on information theory, volume IT-15, N°4, Juillet 1969). Comme la réponse impulsionnelle du canal n'est pas connue et est en outre susceptible d'évoluer dans le temps, l'égaliseur doit être adaptatif, c'est-à-dire pouvoir, au début de la liaison, ajuster ses coefficients de pondération à leurs valeurs optimales (c'est la phase dite d'acquisition ou d'apprentissage de l'égaliseur), et suivre ensuite les variations éventuelles du canal pendant la phase de transmission proprement dite.

Un tel asservissement des coefficients de l'égaliseur est en général obtenu par des méthodes itératives, telle la méthode du gradient stochastique (en effet, les circuits qui permettent leur mise en oeuvre sont alors relativement simples en conviennent bien pour suivre des variations lentes du canal de transmission), mais qui se heurtent inévitablement aux obstacles suivants: si le pas utilisé dans la méthode itérative a une valeur trop élevée, le système de réception risque d'être instable, tandis qu'à un pas faible correspond une vitesse de convergence très lente.

On peut éviter ces deux inconvénients en effectuant la résolution directe de l'équation dite de Wiener-Hopf, qui donne théoriquement les coefficients optimaux de l'égaliseur adaptatif (cette résolution est décrite dans l'article "Noniterative automatic equalization" publié par P. Butler et A. Cantoni en juin 1975, aux pages 621 à 633 de la revue IEEE Transactions on Communications, volume COM-23, N°6), mais sa complexité rend en fait très difficile la mise en oeuvre de cette méthode directe.

La communication effectuée par T. L. Chang, "A new equalization technique", lors de la National Electronics Conference tenue du 8 au 10 octobre 1973 à Chicago (Etats-Unis d'Amérique) donne également une description d'une méthode et d'un circuit d'égalisation adaptative non itérative. Ce circuit d'égalisation est un filtre transversal non récursif à N coefficients de pondération réglables pour la détermination directe desquels on opère, sur la matrice de corrélation des signaux de sortie du canal de transmission, des traitements utilisant des transformations de Fourier, mais à partir de données numériques qui, comme indiqué en page 335, colonne 1, lignes 6 et 7 du deuxième paragraphe de l'introduction ou en page 336, colonne 2, deuxième et troisième paragraphes, forment une séquence périodique dont la période en nombre de symboles est égale au nombre de coefficients de l'égaliseur. Avec une hypothèse aussi restrictive, il résulte d'une part que ladite matrice de corrélation est automatiquement circulante, ce qui permet l'obtention des coefficients optimaux exacts du filtre notamment par des transformations de Fourier directes et inverses, et d'autre part que l'égalisation ne peut être réalisée que pendant la période d'apprentissage de l'égaliseur.

Le but de l'invention est de proposer un système d'égalisation adaptative n'imposant aucune contrainte sur la nature des données transmises et qui, en outre, permette la détermination directe de valeurs approchées satisfaisantes des coefficients de l'égaliseur tout en conservant une structure relativement simple.

L'invention concerne à cet effet un système d'égalisation correspondant au préambule de la revendication 1.

Afin d'atteindre ledit but, le système comporte les caractéristiques de la revendication 1.

Le système peut comporter en addition dans un deuxième exemple de réalisation, les caractéristiques de la revendication 2.

Les deux structures ainsi définies permettent chacune, à l'aide d'approximations simples dont la justification est donnée plus loin, d'obtenir de façon directe et rapide un jeu de coefficients de pondération quasi-optimaux pour le filtre adaptatif, ces valeurs étant recalculées périodiquement, éventuellement avec une cadence de rafraîchissement variable.

D'autres particularités de l'invention apparaîtront plus clairement dans la description détaillée qui suit et en se référant aux dessins annexés dans lesquels:

la figure 1 montre un filtre transversal non récursif de type connu, à N coefficients de pondération;

la figure 2a représente la matrice A de corrélation de N échantillons successifs du processus aléatoire x(t) auquel correspondent les vecteurs-signaux successifs $X_k$ de sortie du canal de transmission, la figure 2b une forme plus simple de cette matrice A compte tenu du fait que x(t) est un processus aléatoire de type stationnaire, et la figure 2c une forme encore simplifiée compte tenu de la longueur de la réponse échantillonnée du canal;

la figure 3a représente, dans le cas où par exemple N est impair et égal à 2 S+1, la matrice circulante R choisie, à partir de la figure 2b, pour constituer l'approximation de la matrice A, et la figure 3b une forme simplifiée de cette matrice R compte tenu de la longueur l de la réponse échantillonnée du canal;

la figure 4 montre quelle partition peut être opérée dans la structure du produit matriciel de l'inverse de la matrice R par la matrice A;

la figure 5 montre un premier exemple de réalisation du système de réception selon l'invention;

les figures 6a et 6b montrent deux variantes de structure d'un deuxième exemple de réalisation du système de réception selon l'invention.

Pour présenter les deux exemples de réalisation, décrits plus loin, du système selon l'invention, on supposera que le système d'émission présent en amont du canal de transmission émet un train de données binaires $s_k$ non corrélées, égales à $\pm 1$, que la réponse impulsionnelle de l'ensemble formé par le canal de transmission, les filtres d'émission et les filtres de réception est h (t), et que le récepteur est en parfaite synchronisation avec l'émetteur.

Si x(t) est le signal reçu et échantillonné à la cadence de 1/T (T étant la durée d'un symbole) et si l'échantillon à un instant $t_0 + k\,T$ est défini par la relation:

$$x_k = \left( \sum_{j=0}^{j=l-1} h_j \cdot s_{k-j} \right) + n_k \qquad (1)$$

dans laquelle l définit la longueur de la réponse échantillonnée du canal de transmission et $n_k$ le bruit à l'instant $t_0 + kT$, on peut alors définir pour un égaliseur adaptatif à N coefficients de pondération $C_0, C_1, C_2, \ldots, C_{N-2}, C_{N-1}$ (voir la figure 1) les vecteurs colonnes suivants, écrits par commodité sous la forme équivalente des vecteurs lignes transposés (TR indiquant l'opération de transposition):

$$X_k = [x_k, x_{k-1}, \ldots, x_{k-N+2}, x_{k-N+1}]^{TR} \qquad (2)$$

et

$$C = [C_0, C_1, C_2, \ldots C_{N-2}, C_{N-1}]^{TR} \qquad (3)$$

Par définition, le signal de sortie de l'égaliseur, avant comparaison avec $s_{k-d}$ et décision, est:

$$y_k = C^{TR}\, X_k \qquad (4)$$

ou, ce qui est équivalent:

$$y_k = X_k^{TR} C \qquad (4\ \text{bis})$$

et l'écart, à $t_0 + kT$, entre $y_k$ et la donnée numérique $s_{k-d}$ correspondante (en considérant que la décision concernant chaque symbole se produit avec un retard d.T par rapport à l'émission de ce symbole, et que ce retard d.T peut être optimisé pour minimiser l'erreur quadratique moyenne, comme indiqué par exemple dans l'article cité précédemment de Butler et Cantoni, à la page 622, § III, A, lignes 5—6 et à la page 624, § C) est donné par la relation:

$$e_k = C^{TR}\, X_k - s_{k-d} \qquad (5)$$

Dans la techinque des égaliseurs, il existe différents critères pour réduire cet écart entre la forme exacte des signaux émis et la forme estimée qu'ils ont en sortie de l'égaliseur. On retiendra ici l'un des plus fréquemment utilisés, à savoir la critère de minimisation de l'erreur quadratique moyenne, et l'on cherchera donc à choisir le vecteur C de façon à minimiser la valeur moyenne de $e_k^2$.

En utilisant simultanément les deux relations équivalentes (4) et (4 bis), on a:

$$e_k^2 = (C^{TR} \cdot X_k - s_{k-d})\ (X_k^{TR} \cdot C - s_{k-d})$$

$$= C^{TR} \cdot X_k \cdot X_k^{TR} \cdot C - 2\, C^{TR} \cdot X_k \cdot s_{k-d} + 1 \qquad (6)$$

On prend la valeur moyenne de $e_k^2$, soit:

$$E(e_k^2) = C^{TR} \cdot AC - 2\, C^{TR} \cdot V + 1 \qquad (7)$$

équation dans laquelle, E étant l'opérateur de valeur moyenne, on a:

$$A = E\ (X_k \cdot X_k^{TR}) \qquad (8)$$

et

$$V = E\ (X_k \cdot s_{k-d}) \qquad (9)$$

La relation (7) fournit l'erreur quadratique moyenne pour un vecteur C donné, erreur que l'on veut minimiser en fonction de C. Pour cela, on doit avoir:

gradient

$$(C) = G(C) = \frac{\partial E}{\partial C} = 2\ (AC - V) = 0$$

G(C) est nul si AC = V, c'est-à-dire si:

$$C = A^{-1}V \qquad (10)$$

Ce vecteur C est le vecteur optimal recherché, qu'on notera $C^A$ dans toute la suite de la description, et qui pourrait être obtenu, comme on l'a dit, par les méthodes itératives citées plus haut ou bien par la résolution directe de l'équation (11).

$$C^A = A^{-1}V \qquad (11)$$

Or, cette résolution est difficile, car elle implique l'inversion de la matrice A, c'est-à-dire la réalisation d'un très grand nombre d'opérations.

Conformément à l'invention, on évite cette résolution en effectuant une détermination d'un vecteur approché, dit $C^R$, du vecteur optimal $C^A$. La détermination de $C^R$ part des observations suivantes: la matrice A définie par la relation (8) et représentée sur la figure 2a est la matrice de corrélation de N échantillons successifs du processus aléatoire x(t). Ce processus étant de type stationnaire, tous les termes $E\ (x_i^2)$ sont égaux;

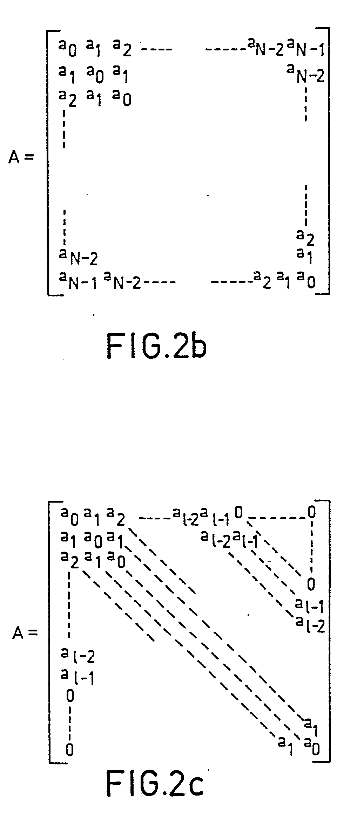

pour la même raison, tous les termes $E(x_i \cdot x_j)$ pour lesquels $|i-j|$ est constant sont aussi égaux. Il en résulte que la matrice A est symétrique, que ses termes diagonaux sont égaux, et qu'elle peut donc être présentée sous la forme définie sur la figure 2b. D'autre part, comme l est la longueur de la réponse échantillonnée du canal, tous les termes $E(x_i \cdot x_j)$ dans lesquels l'écart entre i et j est égal ou supérieur à l sont nuls, puisqu'ils correspondent à des signaux reçus entre lesquels il n'y a plus aucune corrélation. La matrice A prend donc, en définitive, la forme simplifiée représentée sur la figure 2c.

Si le nombre N des coefficients de l'égaliseur est choisi grand devant la longueur l, cette matrice A est quasi-diagonale (de même que sa matrice inverse $A^{-1}$ aux effets de bord près) et l'on peut en définir une approximation qui est une matrice R dite circulante construite de la façon suivante. Si $(a_0, a_1, a_2,\ldots, a_{N-2}, a_{N-1})$ est la première ligne de A et $(r_0, r_1, r_2,\ldots, r_{N-1})$ la première ligne de R, on a $r_i=a_i$ pour tout i inférieur ou égal à N/2 si N est pair ou à $(N-1)/2$ si N est impair, et $r_i=a_{N-i}$ pour tout i supérieur aux mêmes limites.

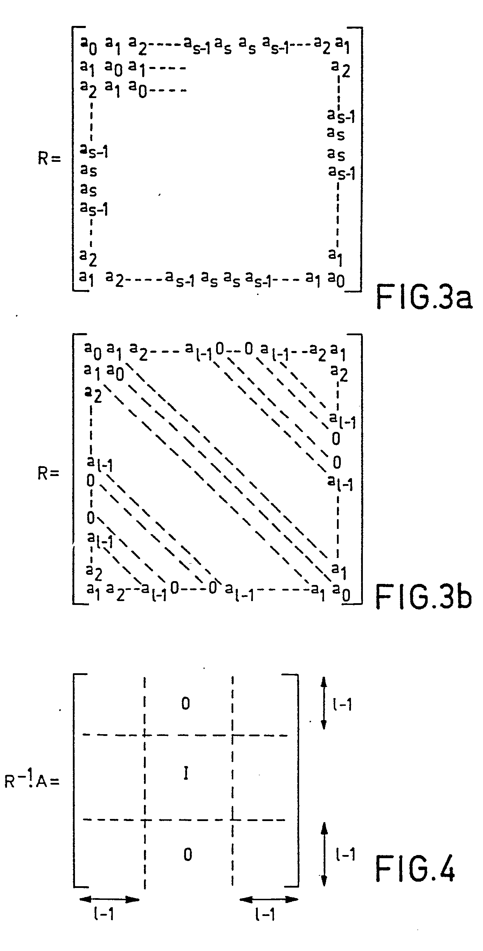

Les lignes suivantes de R, de rang 2 à N, comprennent les mêmes termes que la première ligne de R, mais après permutation circulaire de ces termes vers la droite: après une permutation circulaire vers la droite pour la deuxième ligne par rapport à la première, après une nouvelle permutation circulaire vers la droite pour la troisième ligne par rapport à la deuxième (c'est-à-dire, en fait, deux permutations circulaires successives par rapport à la première ligne de R), et ainsi de suite jusqu'à la Nième ligne de R, déduite de la première par N−1 permutations circulaires vers la droite. Dans le cas où N est impaire et par exemple égal à (2S+1), la matrice R ainsi obtenue est représentée sur la figure 3a; comme la matrice A, cette matrice R peut prendre la forme simplifiée représentée sur la figure 3b et correspondant à la forme simplifiée de A représentée sur la figure 2c. Si cette matrice circulante R est effectivement une bonne approximation de la matrice A, on pourra alors, d'après l'équation (11) $C^A=A^{-1}V$, définir un vecteur $C^R=R^{-1}V$ qui constitue également une bonne approximation du vecteur optimal $C^A$ recherché.

Pour justifier que cette approximation de $C^A$ par $C^R$ est effectivement légitime, on considère les relations définissant $C^A$, vecteur optimal, et $C^R$, vecteur approché:

$$C^A=A^{-1}V \qquad (11)$$

$$C^R=R^{-1}V \qquad (12)$$

De la première, on déduit, par multiplication à gauche:

$$V=A\ C^A$$

puis, par rapport dans la seconde:

$$C^R=R^{-1}\ A\ C^A \qquad (13)$$

Le calcul de $R^{-1}.A$ montre alors que ce produit matriciel a la forme représentée sur la figure 4, et comprend:

un noyau central identique à la matrice identité d'ordre N−2. (l−1);

au-dessus et au-dessous de cette matrice identité, des termes nuls; et

de part et d'autre des colonnes incluant cette matrice identité et ces termes nuls, 2.(l−1) colonnes comprenant des termes quelconques.

Compte tenu de cette structure du produit $R^{-1} \cdot A$ et de la partition qui vient d'y être opérée pour en montrer le caractère particulier, si $C^A$ avait la structure suivante:

$$C^A=[0\ 0\ldots0 \mid C_2^{TR}\ 0\ldots0\ 0]^{\ TR}$$
$$\underbrace{\qquad}_{l-1} \qquad \underbrace{\qquad}_{l-1} \qquad\qquad (14)$$

la multiplication de $R^{-1} \cdot A$ par $C^A$ donnerait:

$$C^R=(R^{-1}A)\ C^A=[0\ 0\ldots0 \mid C_2^{TR} \mid 0\ldots0\ 0]^{TR} \quad (15)$$

c'est-à-dire $C^R=C^A$.

En fait, la relation (14) n'est pas strictement vérifiée. Si l'on exprime $C^A$ de la façon suivante;

$$C^A=[C_1^{TR} \mid C_2^{TR} \mid C_3^{TR}]^{TR} \qquad (16)$$

$$C^A=A^{-1}V \qquad (11)$$

et si l'on considère bien, en raison de la longueur limitée l de la réponse échantillonnée du canal de transmission, d'une part que seuls les l éléments centraux du vecteur V ne sont pas nuls (les N−l autres éléments situés de part et d'autre étant nuls puisque correspondant à des signaux reçus entre lesquels il n'y a pas de corrélation), et d'autre part que la matrice $A^{-1}$ est quasi-diagonale aux effets de bord près, alors on peut affirmer que les composantes des vecteurs $C_1^{TR}$ et $C_3^{TR}$ sont négligeables. La structure de $C^A$ est donc effectivement très proche de celle définie par la relation (14), ce qui montre que la choix de R tel que précisé plus haut permet bien la détermination d'un vecteur $C^R$ approchant de façon satisfaisante le vecteur $C^A$. Comme les deux matrices A et R, de dimensions N×N ne diffèrent que par les termes situés dans les deux triangles supérieur droit et inférieur gauche, l'approximation de A par R et donc de $C^A$ par $C^R$ est d'autant meilleure que le nombre N est plus grand; $C^R$ est même asymptotiquement équivalent à $C^A$. Enfin, l'étude mathématique de la matrice R montre que celle-ci est toujours définie et que sa matrice inverse existe toujours, ce qui prouve l'existence et l'unicité de $C^R$.

En diagonalisant la matrice R on peut écrire l'équation (12) de la façon suivante:

$$C^R=R^{-1}V=P\ G^{-1}\ P^{cc}V \qquad (17)$$

avec: $G^{-1}$=matrice diagonale dont les éléments diagonaux sont les inverses des valeurs propres $\lambda_0, \lambda_1, \lambda_2, \ldots \lambda_{N-2}, \lambda_{N-1}$ de la matrice R;

avec: P=matrice unitaire symétrique d'ordre N, connue à priori puisqu'indépendante de R et commune à toutes les matrices circulantes, et dont les colonnes sont les vecteurs propres de la matrice R (cette matrice P peut être définie par:

$$P=\| P_{fg}\| \quad (f,g=0, 1, 2, \ldots, N-2, N-1)$$

$$P_{fg}=\frac{1}{\sqrt{N}} \exp \left(j\frac{2\pi\ fg}{N}\right)$$

et la multiplication d'un vecteur par cette matrice fournit, au coefficient

$$\frac{1}{\sqrt{N}}$$

près, la transformée de Fourier discrète inverse, ou TFD inverse, de ce vecteur);

et avec: $P^{cc}$=matrice complexe conjuguée de P (de même, cette matrice $P^{cc}$ peut être définie par:

$$P^{cc}=\| P_{fg}\| \quad (f,g=0, 1, 2,\ldots, N-2, N-1)$$

$$P_{fg}=\frac{1}{\sqrt{N}} \exp \left(-j\frac{2\pi\ fg}{N}\right)$$

et la multiplication d'un vecteur par $p^{cc}$ fournit, au coefficient

$$\frac{1}{\sqrt{N}}$$

près, la transformée de Fourier discrète, ou TFD, de ce vecteur).

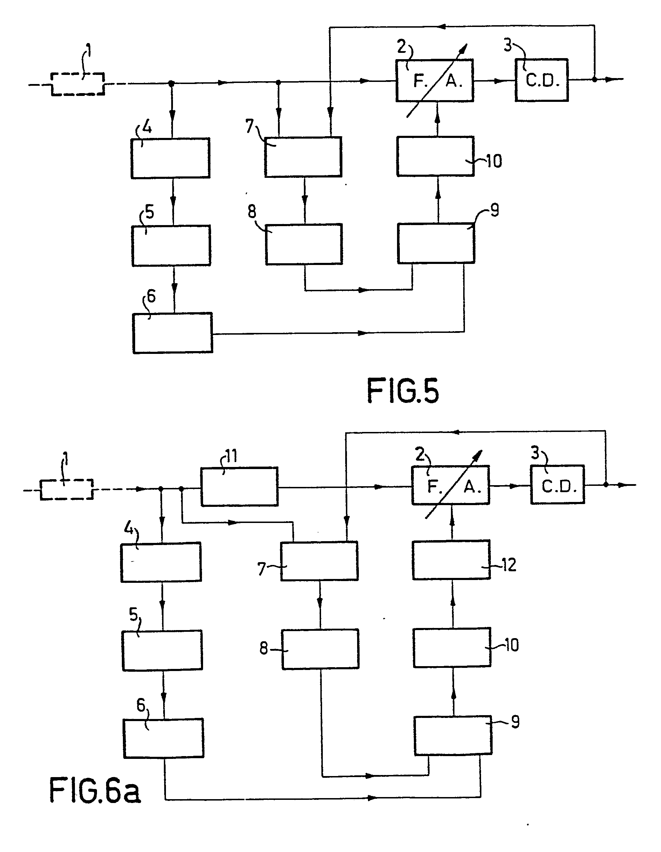

De l'expression (17), on peut déduire une première structure de système de réception de données numériques permettant d'obtenir le vecteur des coefficients de pondération recherchés. Ce système représenté sur la figure 5 comprend d'abord, en sortie d'un canal de transmission 1 des données, un filtre adaptatif non récursif 2, à coefficients de pondération réglables, noté F.A. et qui reçoit le vecteur-signal de sortie $X_k$ du canal de transmission. Ce filtre 2 est suivi d'un circuit de décision 3, noté C.D., fournissant à partir du signal de sortie $y_k$ du filtre une estimation $\hat{s}_{k-d}$ de chacune des données numériques $s_{k-d}$ émises à l'entrée du canal (exclusivement pendant la phase dite d'acquisition ou d'apprentissage, le système connaît les données numériques émises et l'estimation $\hat{s}_{k-d}$ est alors toujours égale à la donnée $s_{k-d}$ elle-même). Pour la détermination des coefficients de pondération du filtre 2, le système de la figure 4 comprend également:

un circuit d'estimation 4 de la matrice carrée A de corrélation des vecteurs $X_k$, théoriquement selon la relation suivante:

estimation de

$$A=A^e=\frac{1}{M} \sum_{i=1}^{i=M} X_i . X_i^{TR} \qquad (18)$$

M étant un entier qui représente le nombre de durées T de symbole, fixé par un circuit d'horloge et définissant l'intervalle sur lequel est effectuée l'estimation de A (dans la réalisation ici décrite, on a testé M=400 et M=500 qui donnent l'un et l'autre de bons résultats, mais le choix de cet entier résulte de toute façon d'un compromis entre la précision des calculs et la cadence de répétition de ces calculs). En fait, on a observé précédemment (voir les simplifications qui ont permis de passer de la figure 2a à la figure 2c pour exprimer la matrice A) d'une part que, dans chaque ligne ou colonne de la matrice A symètrique, un certain nombre de termes étaient nuls et d'autre part que tous les termes non nuls de la matrice A étaient déjà contenus dans sa première ligne (ou colonne). De ces observations, il résulte que l'estimation de A ne signifie pas l'estimation de $N^2$ termes mais simplement, dans la première ligne de la matrice estimée $A^e$ de A, l'estimation sur un intervalle égale à M des $(N/2+1)$ premiers termes $(a_0, a_1, a_2, \ldots, a_{N/2})$ si N est pair ou des $(N+1)/2$ premiers termes $(a_0, a_1, a_2,\ldots, a_{(N-1)/2})$ si N est impair. Cette importante réduction du nombre de termes à estimer est très avantageuse sur le plan de la simplicité des circuits;

un circuit d'approximation 5 de la matrice $A^e$ par une matrice circulante R, cette approximation de $A^e$ par R étant obtenue par substitution à la première ligne $(a_0, a_1, a_2,\ldots, a_{N-2}, a_{N-1})$ de $A^e$ d'une première ligne $(r_0, r_1, r_2,\ldots, r_{N-2}, r_{N-1})$ dans laquelle on a $r_i=a_i$ pour tout i inférieur ou égal à N/2 si N est pair ou à $(N-1)/2$ si N est impair et $r_i=a_{N-i}$ pour tout i supérieur aux mêmes limites. Comme R est circulante, la détermination de sa première ligne suffit pour la connaissance de la matrice entière et l'approximation de $A^e$ par R revient donc, plus simplement, à la formation du vecteur $U=(r_0, r_1, r_2,\ldots, r_{N-2}, r_{N-1})$ dans lequel on a $r_i=a_i$ pour tout i au plus égal à N/2 si N est pair ou à $(N-1)/2$ si N est impair et $r_i=a_{N-i}$ pour tout i supérieur aux mêmes limites;

un circuit de calcul de la matrice diagonale G dont les termes diagonaux sont les valeurs propres de matrice circulante R, circuit qui, compte tenu des simplifications déjà effectuées en (A) et (B), consiste en fait en un circuit de détermination 6 d'un vecteur A Des N valeurs propres $\lambda_0, \lambda_1, \lambda_2, \ldots, \lambda_{N-2}, \lambda_{N-1}$ à l'aide de la relation $\Lambda=\sqrt{N} . P . U^{TR}$, dans laquelle $U^{TR}$ est le vecteur transposé du vecteur U formé en (B) et P est la matrice unitaire déjà définie;

un circuit d'estimation 7 du vecteur $V=E(X_k\ s_{k-d})$, E désignant l'opérateur de calcul de valeur moyenne, selon la relation suivante:

estimation de

$$V=V^e=\frac{1}{M} \sum_{i=1}^{i=M} X_i . s_{i-d} \qquad (19)$$

un circuit de multiplication 8 du vecteur $V^e$ ainsi obtenu par la matrice $P^{cc}$, matrice complexe conjuguée de la matrice P;

un circuit de multiplication du produit $P^{cc}$ . $V^e$ par la matrice diagonale $G^{-1}$, ce circuit consistant en fait, en raison des simplifications déjà opérées, en un circuit de division 9 du vecteur $Q = P^{cc}$ . $V^e$ par le vecteur $\Lambda$, cette division étant effectuée terme à terme de façon que les termes du vecteur $F = f_0, f_1, f_2, \ldots, f_{N-2}, f_{N-1}) = Q/\Lambda$ soient fournis par l'expression $f_i = q_i/\lambda_i$ quel que soit i;

un circuit de multiplication 10 du vecteur F par la matrice unitaire P, le vecteur $C^R$ ainsi obtenu constituant l'approximation recherchée du vecteur colonne $C^A$ des N coefficients de pondération du filtre transversal 2 qui assurent une égalisation. optimale du canal de transmission 1.

Une deuxième structure de système de réception conforme à l'invention peut être déduite de l'expression (17) obtenue plus haut si l'on effectue une multiplication des deux membres de cette expression par $P^{cc}$. On obtient en effet:

$$P^{cc} \; C^R = P^{cc} \; P.G^{-1}.P^{cc}V$$
$$= G^{-1} \; P^{cc}V \qquad\qquad (21)$$
$$= G^{-1} \; P^{cc} . E(X_k . s_{k-d})$$
$$= G^{-1}E(P^{cc} . X_k . s_{k-d})$$
$$= G^{-1} \; E \; (Z_k^{cc}. s_{k-d})$$
$$D^R \quad = G^{-1} \; W \qquad\qquad (22)$$

(avec $Z_k = P . X_k$, $Z_k^{cc} = P^{cc} . X_k$, et $D^R = P^{cc} . C^R$).

Sur la figure 6a, cette multiplication de (17) par $P^{cc}$ se traduit, par rapport à la figure 5, par l'apparition de deux circuits supplémentaires 11 et 12. Le circuit 11 assure la multiplication du vecteur-signal de sortie $X_k$ du canal de transmission 1 par la matrice unitaire P, afin de délivrer le nouveau signal $Z_k$ fourni au filtre transversal 2, et le circuit 12 assure la multiplication du vecteur $C^R$ de sortie du circuit 10 par la matrice $P^{cc}$, afin de délivrer le vecteur $D^R$ constituant une approximation du vecteur des N coefficients de pondération du filtre adaptatif 2 qui, lorsque ce filtre reçoit le signal $Z_k$, assurent une égalisation optimale du canal de transmission.

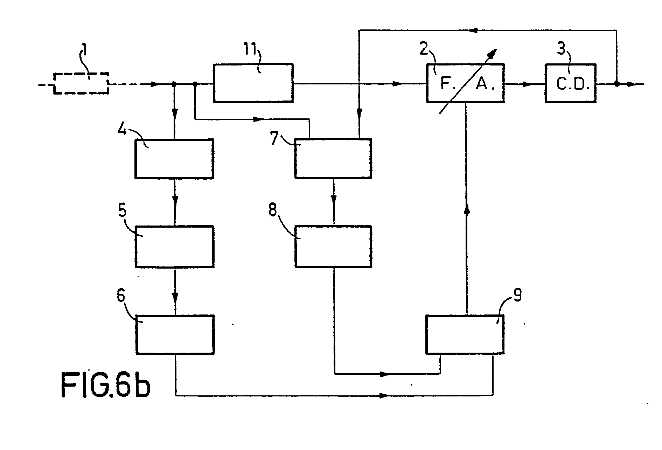

On constate sur la figure 6a que les circuits successifs 10 et 12 assurent respectivement une multiplication par P et une multiplication par $P^{cc}$. La matrice P étant unitaire et symétrique, on a: $P \; P^{cc} = P^{cc}P = 1$, et l'on peut donc, en réalité, ne plus prévoir les deux circuits 10 et 12, dont les effets s'annulent, et proposer la structure simplifiée de la figure 6b. Le système de réception de la figure 6b comprend donc cette fois, en plus du filtre 2 et du circuit 3:

le circuit d'estimation 4, le circuit d'approximation 5 et le circuit de détermination 6, tous trois déjà décrits en relation avec la figure 5;

le circuit 11 de multiplication du vecteur-signal de sortie $X_k$ du canal de transmission 1 par la matrice unitaire P, délivrant le signal $Z_k = P . X_k$;

le circuit d'estimation 7 du vecteur $V^e$, le circuit 8 de multiplication de $V^e$ par $P^{cc}$, et le circuit de division 9, déjà décrits en référence à la figure 5, le circuit 9 étant cette fois celui qui, en raison de la suppression du circuit 10, délivre le vecteur constituant une approximation du vecteur des N coefficients de pondération du filtre transversal 2 qui assurent une égalisation optimale du canal de transmission 1.

Bien entendu, la présente invention n'est pas limitée aux exemples de réalisation qui viennent d'être décrits et représentés, à partir desquels on pourra prévoir d'autres modes de réalisation sans pour cela sortir du cadre de l'invention.

On peut noter par exemple que, dans la cas où le nombre N des coefficients du filtre est égal à une puissance entière de 2, la transformée de Fourier discrète devient une transformée de Fourier rapide (au sujet de laquelle on pourra consulter notamment l'article "A guided tour of the fast Fourier transform" de G.D. Bergland, paru dans IEEE Spectrum, juillet 1969, pages 41 à 52), qui est essentiellement caractérisée par un nombre d'éléments discrets tels qu'il en résulte, dans le cas des réalisations décrits ici, une diminution très sensible du nombre des opérations effectuées dans les circuits de multiplication par P ou par $P^{cc}$, et donc une réduction importante du temps de calcul.

Par ailleurs, le circuit d'horloge qui fixe la valeur de l'entier M définissant l'intervalle d'estimation de A et de V peut être réglable pour faire varier la valeur de M et modifier le compromis précision des calculs-cadence de répétition de ces calculs.

**Revendications**

1. Système d'égalisation adaptative de données numériques présentes en sortie d'un canal (1) introduisant dans la transmission des données des distorsions d'amplitude et de phase, ce système comprenant, à la suite du canal (1) délivrant un vecteur-signal $X_k$, un filtre transversal (2) non récursif à N coefficients de pondération réglables, suivi d'un circuit de décision (3) destiné à fournir à partir du signal de sortie $y_k$ du filtre une estimation $\hat{s}_{k-d}$ de chacune des données numériques $s_{k-d}$ émises à l'entrée du canal, ledit filtre transversal comprenant notamment, pour la détermination directe de ces N coefficients, des moyens de calcul matriciel d'un vecteur $PG^{-1} \; P^{cc}V$, où $P^{cc}$ représente une transformation de Fourier discrète, $G^{-1}$ la matrice diagonale de l'inverse d'une matrice circulante, P un transformation de Fourier discrète inverse, et V un vecteur-colonne faisant intervenir les N valeurs du vecteur-signal $X_k$, caractérisé:

(A) en ce que les données numériques transmises sont de type quelconque, périodiques ou non;

(B) et en ce que, pour une détermination directe d'une valeur approchée desdits N coefficients, il est associé à ce filtre (2):

(1) des moyens d'estimation d'une matrice circulante R constituant une approximation de la matrice carrée A de corrélation des vecteurs $X_k$, lesdits moyens comprenant:

(a) un circuit (4) d'estimation de la matrice $A^e$

constituant une approximation de la matrice carrée A de corrélation des vecteurs $X_k$ lorsque le nombre N est grand devant la longueur de la réponse échantillonnée du canal (1), puis, dans cette matrice $A^e$, d'estimation des (N/2+1) premiers termes ($a_0$, $a_1$, $a_2$, . ., $a_{N/2}$) de la première ligne si N est pair, ou des (N+1)/2 premiers termes ($a_0$, $a_1$, $a_2$,. . ., $a_{(N-1)/2}$) de la première ligne si N est impair, sur un intervalle égal à un nombre déterminé M de durées T de symbole, à partir de la relation:

$$A^e = ( \sum_{i=1}^{i=M} X_i X_i^{TR})/M$$

où TR est l'opérateur de transposition;

(b) un circuit de formation (5) d'un vecteur $U = (r_0, r_1, r_2, \ldots, r_{N-2}, r_{N-1})$ dans laquel on a $r_i = a_i$ pour tout i au plus égal à N/2 si N est pair ou à (N−1)/2 si N est impair et $r_i = a_{N-i}$ pour tout i supérieur aux mêmes limites;

(2) des moyens d'estimation du vecteur $V = E(X_k . s_{k-d})$, E désignant l'opérateur de calcul de valeur moyenne, et lesdits moyens comprenant:

(c) un circuit d'estimation (7) du vecteur V selon la relation

$$V^e = ( \sum_{i=1}^{i=M} X_i \, s_{i-d})/M;$$

et en ce que lesdits moyens de calcul matriciel comprennent eux-mêmes:

(d) un circuit de détermination (6) d'un vecteur de N valeurs propres $\lambda_0$ à $\lambda_{N-1}$ à l'aide de la relation: $\Lambda = \sqrt{N} . P . U^{TR}$ dans laquelle $U^{TR}$ est le vecteur transposé du vecteur U formé en (b) et P est la matrice unitaire d'ordre N définie par:

$$P = \| P_{f,g} \| \ (f,g = 0, 1, 2, \ldots, N-2, N-1)$$

(avec

$$P_{f,g} = \frac{1}{\sqrt{N}} . \exp . [j \ \frac{2\pi \ fg}{N}])$$

(e) un circuit de multiplication (8) du vecteur $V^e$ par la matrice complexe conjuguée $P^{cc}$ de la matrice P;

(f) un circuit de division (9) du vecteur $Q = P^{cc} . V^e$ ainsi obtenu par le vecteur $\Lambda$, cette division étant effectuée terme à terme de façon que les termes du vecteur $F = (f_0, f_1, f_2, \ldots, f_{N-2}, f_{N-1}) = Q/\Lambda$ soient fournis par l'expression $f_i = q_i/\lambda_i$, quel que soit i;

(g) un circuit de multiplication (10) du vecteur F par la matrice unitaire P, le vecteur $C^R = PG^{-1} \, P^{cc}V^e$ ainsi obtenu, où $G^{-1}$ est la matrice diagonale de l'inverse de la matrice circulante R, constituant un vecteur d'approximation du vecteur des N coefficients de pondération optimaux du filtre transversal (2).

2. Système selon la revendication 1, caractérisé en ce qu'il comprend également:

(h) un circuit de multiplication (11) du vecteur-signal de sortie du canal de transmission (1) par la matrice unitaire P, délivrant un signal de sortie $Z_k$ fourni à l'entrée du filtre (2);

(i) un circuit de multiplication (12) du vecteur $C^R$ de sortie du circuit (10) par la matrice $P^{cc}$, pour délivrer un vecteur $D^R$ constituant un approximation du vecteur des N coefficients de pondération optimaux du filtre transversal (2) lorsque ce filtre reçoit le signal de sortie $Z_k$ du· circuit de multiplication (11).

3. Système selon l'une des revendications 1 et 2, caractérisé en ce qu'il comprend des moyens de réglage du nombre entier M pour modifier l'intervalle d'estimation dans les circuits d'estimation (4) et (7).

**Patentansprüche**

1. Adaptives Entzerrungssystem für digitale Daten an dem Ausgang eines Amplituden- und Phasenverzerrungen in die Datenübertragung einführenden Kanals (1), wobei das System im Anschluss an den einen Signalvektor $X_k$ lieferenden Kanal (1) ein nicht-rekursives Transversalfilter (2) mit N regelbaren Gewichtskoeffizienten enthält, dem ein Entscheidungskreis (3) folgt, um aus dem Ausgangssignal $y_k$ des Filters eine Schätzung $\hat{s}_{k-d}$ jedes der dem Eingang des Kanals zugeführten digitalen Daten $s_{k-d}$ zu bilden, wobei das genannte Transversalfilter insbesondere zur direkten Bestimmung dieser N Koeffizienten Matrixrechenmittel aufweist zum Berechnen eines Vektors $PG^{-1} \, P^{cc}V$, wobei $P^{cc}$ eine diskrete Fouriertransformation darstellt, $G^{-1}$ die Diagonalmatrix der Inverse einer zirkulanten Matrix ist, P eine diskrete inverse Fouriertransformation und V ein Spaltenvektor ist, der die N Werte des Signalvektors $X_k$ einführt, ·dadurch gekennzeichnet, dass:

(A) die übertragenen digitalen Daten von jedem Typ sind, periodisch oder nicht-periodisch,

(B) für eine direkte Bestimmung eines angenäherten Wertes der genannten N Koeffizienten mit diesem Filter (2) verbunden sind:

(1) Mittel zum Schätzen einer zirkulanten Matrix R, die eine Annäherung der quadratischen Korrelationsmatrix A der Vektoren $X_k$ bildet, wobei die genannten Mittel die folgenden Elemente aufweisen:

(a) eine Schätzungsanordnung (4) zum Schätzen der Matrix $A^e$, die eine Annäherung der quadratischen Korrelationsmatrix A der Vektoren $X_k$ bildet, wenn die Zahl N gegenüber der Länge der Abtastantwort des Kanals (1) gross ist, sowie, in dieser Matrix $A^e$, zum Schätzen der (N/2+1) ersten Terme ($a_0$, $a_1$, $a_2$, . . ., $a_{N/2}$) der ersten Zeile wenn N gerade ist oder der (N+1)/2 ersten Terme ($a_0$, $a_1$, $a_2$, . . ., $a_{(N-1)/2}$) der ersten Zeile wenn N ungerade ist, über ein Intervall gleich einer bestimmten Zahl M von Symboldauern T, ausgehend von der Beziehung:

$$A^e = \left( \sum_{i=1}^{i=M} X_i X_i^{TR} \right)/M$$

wobei TR der Transpositionsoperator ist,

(b) eine Anordnung (5) zum Bilden eines Vektors $U = (r_0, r_1, r_2, \ldots, r_{N-2}, r_{N-1})$, worin $r_i = a_i$ für jeden Wert von i höchstens gleich N/2 wenn N gerade ist oder höchstens gleich (N−1)/2 wenn N ungerade ist und $r_i = a_{N-i}$ für jeden Wert von i, der die genannten Grenzen überschreitet;

(2) Mittel zum Schätzen des Vektors $V = E(X_k \cdot s_{k-d})$, wobei E der Operator zum Berechnen des Mittelwertes ist und die genannten Mittel die folgenden Elemente enthalten:

(c) eine Anordnung (7) zur Schätzung des Vektors V entsprechend der Beziehung

$$V^e = \left( \sum_{i=1}^{i=M} X_i \, s_{i-d} \right)/M;$$

und dass die genannten Matrixrechenmittel selber die folgenden Elemente enthalten:

(d) eine Anordnung (6) zum Bstimmen eines Vektors mit N Eigenwerten $\lambda_0$ bis $\lambda_{N-1}$ mit Hilfe der Beziehung:

$\Lambda = \sqrt{N}.P.U^{TR}$, wobei $U^{TR}$ die Transponierte des gemäss (b) gebildeten Vektors U ist und P die unitäre Matrix der Ordnung N, die definiert ist durch:

$$P = \| \, p_{f,g} \, \| \; (f,g = 0, 1, 2, \ldots, N-2, N-1)$$

(mit

$$p_{f,g} = \frac{1}{\sqrt{N}} \cdot \exp . \; [j\frac{2\pi \; fg}{N}]) \quad ;$$

(e) eine Multiplizieranordnung (8) zum Multiplizieren des Vektors $V^e$ mit der konjugiertkomplexen Matrix $P^{cc}$ der Matrix P;

(f) eine Anordnung (9) zum Teilen des so erhaltenen Vektors $Q = P^{cc} \cdot V^e$ durch den Vektor $\Lambda$, wobei dieser Teilungsvorgang Term für Term durchgeführt wird, so dass die Terme des Vektors $F = (f_0, f_1, f_2, \ldots, f_{N-2}, f_{N-1}) = Q/\Lambda$ für jeden Wert von i gegeben werden durch den Ausdruck $f_i = q_i/\lambda_i$;

(g) eine Multiplizieranordnung (10) zum Multiplizieren des Vektors F mit der unitären Matrix P, wobei der so erhaltene Vektor $C^R = PG^{-1} \, P^{cc} \, V^e$, mit $G^{-1}$ die Diagonalmatrix der Inversen der zirkulanten Matrix R, einen Annäherungsvektor des Vektors der N optimalen Gewichtskoeffizienten des Transversalfilters (2) bildet.

2. System nach Anspruch 1, dadurch gekennzeichnet, dass es ebenfalls die folgenden Elemente enthält:

(h) eine Multiplizieranordnung (11) zum Multiplizieren des Ausgangssignalvektors des Übertragungskanals (1) mit der unitären Matrix P, wodurch ein Ausgangssignal $Z_k$ geliefert wird, das dem Eingang des Filters (2) zugeführt wird;

(i) eine Multiplizieranordnung (12) zum Multiplizieren des Ausgangsvektors $C^R$ der Anordnung (10) mit der Matrix $P^{cc}$ zum Liefern eines Vektors $D^R$, der eine Annäherung des Vektors der optimalen Gewichtskoeffizienten des Transversalfilters (2) bildet, wenn dieses Filter das Ausgangssignal $Z_k$ der Multiplizieranordnung (11) erhält.

3. System nach einem der Ansprüche 1 und 2, dadurch gekennzeichnet, dass es Mittel zur Regelung der ganzen Zahl M zum Ändern des Schätzungsintervalls in den Schätzungsanordnungen (4) und (7) aufweist.

**Claims**

1. An adaptive equalizing system for digital data present at the output of a channel (1) introducing amplitude and phase distortion in the data transmission, the system comprising, arranged after the channel (1) producing a signal vector $X_k$, a non-recursive transversal filter having N adjustable weighting coefficients, followed by a decision circuit (3) intended to produce from the filter output signal $y_k$ an estimation $\hat{s}_{k-d}$ of each of the digital data $s_{k-d}$ transmitted to the input of the channel, said transversal filter comprising more specifically for a direct determination of these N coefficients, matrix means for calculating a vector $PG^{-1} \, P^{cc}V$, where $P^{cc}$ represents a discrete Fourier transform, $G^{-1}$ represents the diagonal matrix of the inverse of a circulant matrix, P represents an inverse discrete Fourier transform and V a column vector introducing the N values of the signal vector $X_k$, characterized:

(A) in that the transmitted digital data are of any type, periodical or non-periodical,

(B) and in that for a direct determination of an approximate value of said N coefficients these are associated with this filter (2);

(1) means for estimating a circulant matrix R constituting an approximation of the square correlation matrix A of the vectors $X_k$, said means comprising:

(a) a circuit (4) for estimating the matrix $A^e$ constituting an approximation of the square correlation matrix A of the vectors $X_k$ when the number N is large relative to the length of the sampled response of the channel (1), thereafter in this matrix $A^e$, for estimating the (N/2+1) first terms $(a_0, a_1, \ldots, a_{N/2})$ of the first row if N is even, or the (N+1)/2 first terms $(a_0, a_1, a_2, \ldots, a_{(N-1)/2})$ of the first row if N is odd, in an interval equal to a predetermined number M of symbol durations T, on the basis of the relation:

$$A^e = \left( \sum_{i=1}^{i=M} X_i X_i^{TR} \right)/M$$

where TR is the operator for forming the transpose,

(b) a circuit (5) for forming a vector $U = (r_0, r_1, r_2, \ldots, r_{N-2}, r_{N-1})$ in which $r_i = a_i$ for every *i* not exceeding N/2 if N is even or not exceeding (N−1)/2 if N is odd, and $r_i = a_{N-i}$ for every *i* exceeding said limits;

(2) means for estimating the vector $V=E(X_k \cdot s_{k-d})$, where E is the operator for calculating the mean value, and said means comprising:

(c) a circuit (7) for determining an estimation of the vector V in accordance with the relation

$$V^e = (\sum_{i=1}^{i=M} X_i \ s_{i-d})/M;$$

and in that said matrix calculating means itself comprises:

(d) a circuit (6) for determining a vector having N eigen values $\lambda_0$ to $\lambda_{N-1}$ with the aid of the relation:

$\Lambda = \sqrt{N}.P.U^{TR}$ in which $U^{TR}$ is the transpose of the vector U formed sub (b) and P is the unitary matrix of the order N defined by

$$P = \| P_{f,g} \| \ (f,g = 0, 1, 2, \ldots, N-2, N-1)$$

$$(\text{where} \quad P_{f,g} = \frac{1}{\sqrt{N}} . \exp .[j\frac{2\pi \ fg}{N}]);$$

(e) a circuit (8) for multiplying the vector $V^e$ by the complex conjugate matrix $P^{cc}$ of the matrix P;

(f) a circuit (9) for dividing the vector $Q = P^{cc} . V^e$ thus obtained by the vector $\Lambda$, this dividing operation being effected term-by-term such that the terms of the vector $F = (f_0, f_1, f_2, \ldots f_{N-2}, f_{N-1}) = Q/\Lambda$ are supplied by the expression $f_i = q_i/\lambda_i$, whatever the value if $i$;

(g) a circuit (10) for multiplying the vector F by the unitary matrix P, the vector $C^R = PG^{-1}P^{cc}V^e$ thus obtained, where $G^{-1}$ is the diagonal matrix of the inverse of the ciculant matrix R, constituting a vector which is an approximation of the vector of the N optimum weighting coefficients of the transversal filter (2).

2. A system as claimed in Claim 1, characterized in that it also comprises

(h) a circuit (11) for multiplying the output signal vector of the transmission channel (1) by the unitary matrix P, producing an output signal $Z_k$ applied to the input of the filter (2);

(i) a circuit (12) for multiplying the output vector $C^R$ of the circuit (10) by the matrix $P^{cc}$, for producing a vector $D^R$ which constitutes an approximation of the vector of the N optimum weighting coefficients of the transversal filter (2) when this filter receives the output signal $Z_k$ of the multiplying circuit (11).

3. A system as claimed in one of the Claims 1 and 2, characterized in that it comprises means for controlling the integral number M for modifying the estimation interval in the estimation circuits (4) and (7).

FIG.1

FIG.2a

$$A = \begin{bmatrix} E(X_k^2) & E(X_k \cdot X_{k-1}) & \text{-------} & E(X_k \cdot X_{k-N+1}) \\ E(X_{k-1} \cdot X_k) & E(X_{k-1}^2) & \text{--------} & E(X_{k-1} \cdot X_{k-N+1}) \\ E(X_{k-2} \cdot X_k) & E(X_{k-2} \cdot X_{k-1}) & \text{------} & E(X_{k-2} \cdot X_{k-N+1}) \\ & & & \\ E(X_{k-N+3} \cdot X_k) & E(X_{k-N+3} \cdot X_{k-1}) & \text{-----} & E(X_{k-N+3} \cdot X_{k-N+1}) \\ E(X_{k-N+2} \cdot X_k) & E(X_{k-N+2} \cdot X_{k-1}) & \text{-----} & E(X_{k-N+2} \cdot X_{k-N+1}) \\ E(X_{k-N+1} \cdot X_k) & E(X_{k-N+1} \cdot X_{k-1}) & \text{------} & E(X_{k-N+1}^2) \end{bmatrix}$$

$$
A = \begin{bmatrix}
a_0 & a_1 & a_2 & \text{----} & & \text{----} & a_{N-2} & a_{N-1} \\
a_1 & a_0 & a_1 & & & & & a_{N-2} \\
a_2 & a_1 & a_0 & & & & & \vdots \\
\vdots & & & & & & & \\
& & & & & & & \vdots \\
\vdots & & & & & & & a_2 \\
a_{N-2} & & & & & & & a_1 \\
a_{N-1} & a_{N-2} & \text{----} & & & \text{----} & a_2 & a_1 & a_0
\end{bmatrix}
$$

## FIG.2b

$$
A = \begin{bmatrix}
a_0 & a_1 & a_2 & \text{----} & a_{l-2} & a_{l-1} & 0 & \text{----} & & 0 \\
a_1 & a_0 & a_1 & & & a_{l-2} & a_{l-1} & & & \vdots \\
a_2 & a_1 & a_0 & & & & & & & 0 \\
\vdots & & & & & & & & & a_{l-1} \\
& & & & & & & & & a_{l-2} \\
a_{l-2} & & & & & & & & & \\
a_{l-1} & & & & & & & & & \\
0 & & & & & & & & a_1 \\
\vdots & & & & & & & a_1 & a_0 \\
0 & & & & & & & &
\end{bmatrix}
$$

## FIG.2c

$$R = \begin{bmatrix} a_0 & a_1 & a_2 & \cdots & a_{s-1} & a_s & a_s & a_{s-1} & \cdots & a_2 & a_1 \\ a_1 & a_0 & a_1 & \cdots & & & & & & & a_2 \\ a_2 & a_1 & a_0 & \cdots & & & & & & & \\ & & & & & & & & & & a_{s-1} \\ & & & & & & & & & & a_s \\ a_{s-1} & & & & & & & & & & a_s \\ a_s & & & & & & & & & & a_{s-1} \\ a_s & & & & & & & & & & \\ a_{s-1} & & & & & & & & & & \\ & & & & & & & & & & \\ a_2 & & & & & & & & & & a_1 \\ a_1 & a_2 & \cdots & & a_{s-1} & a_s & a_s & a_{s-1} & \cdots & a_1 & a_0 \end{bmatrix}$$

**FIG.3a**

$$R = \begin{bmatrix} a_0 & a_1 & a_2 & \cdots & a_{l-1} & 0 & \cdots & 0 & a_{l-1} & \cdots & a_2 & a_1 \\ a_1 & a_0 & & & & & & & & & & a_2 \\ a_2 & & & & & & & & & & & \\ & & & & & & & & & & & a_{l-1} \\ & & & & & & & & & & & 0 \\ a_{l-1} & & & & & & & & & & & 0 \\ 0 & & & & & & & & & & & a_{l-1} \\ 0 & & & & & & & & & & & \\ a_{l-1} & & & & & & & & & & & \\ a_2 & & & & & & & & & & & a_1 \\ a_1 & a_2 & \cdots & a_{l-1} & 0 & \cdots & 0 & a_{l-1} & \cdots & & a_1 & a_0 \end{bmatrix}$$

**FIG.3b**

$$R^{-1} \cdot A = \begin{bmatrix} & \vdots & 0 & \vdots & \\ \cdots & \vdots & & \vdots & \cdots \\ & \vdots & I & \vdots & \\ \cdots & \vdots & & \vdots & \cdots \\ & \vdots & 0 & \vdots & \end{bmatrix} \begin{matrix} \updownarrow \, l-1 \\ \\ \\ \\ \updownarrow \, l-1 \end{matrix}$$

$\underset{l-1}{\leftrightarrow} \qquad \underset{l-1}{\leftrightarrow}$

**FIG.4**

FIG.5

FIG.6a

4

FIG.6b